# EUROPEAN PATENT APPLICATION

(11) **EP 4 528 290 A1**
(43) Date of publication of application: **26.03.2025**
(21) Application number: 22942778.6
(22) Date of filing: 09.11.2022
(51) Int. Cl.: G01P 15/08, G01C 19/5783

(54) **INERTIAL MEASUREMENT DEVICE**

(30) Priority: 17.05.2022 US 202263364844 P
(71) Applicant: Sony Group Corporation, Tokyo 108-0075 (JP)
(72) Inventor: AMANO Toru, Tokyo 108-0075 (JP); YAMASHITA Kosei, Tokyo 108-0075 (JP); SONOURA Akihiro, Tokyo 108-0075 (JP)
(74) Representative: MFG Patentanwälte Meyer-Wildhagen Meggle-Freund Gerhard PartG mbB
(86) International application number: PCT/JP2022/041700
(87) International publication number: WO 2023/223577

(57) **Abstract**

The present disclosure relates to an inertial measurement apparatus capable of improving detection accuracy of a multi-IMU.

A square opening is provided on a board, and four island portions having a size corresponding to 1/4 of the opening and mounting one inertial measurement unit (IMU) are connected to a part of a right portion or a left portion from a center of each side of the opening by a connection portion less rigid than the board or island portion. The inertial measurement apparatus can be applied to a plurality of IMUs.

## Description

### [Technical Field]

The present disclosure relates to an inertial measurement apparatus, and, particularly, to an inertial measurement apparatus capable of improving detection accuracy of a multi-IMU.

### [Background Art]

A multi-IMU that improves detection accuracy by integrating detection results of a plurality of inertial measurement units (IMUs) is proposed.

As a technology for improving detection accuracy of the multi-IMU, a technology for appropriately combining observation values of a plurality of IMUs according to noise characteristics of the plurality of IMUs and conditions for the observation values is proposed (see PTL 1).

### [Citation List]

### [Patent Literature]

[PTL 1]
WO 2020/045099

### [Summary]

### [Technical Problem]

Incidentally, a vibration type IMU using Micro Electro Mechanical Systems (MEMS) used for a multi-IMU using a plurality of IMUs, including an example of PTL 1, detects an angular velocity on the basis of a coriolis force generated by rotating an object while applying a vibration.

However, since the plurality of IMUs cause the vibration, interference is generated by the vibration generated by the other IMUs and beat noise caused by the interference may occur for each IMU.

In particular, with the recent improvement in the work accuracy of IMUs, IMUs in which variations in manufacturing are reduced and frequencies of vibrations generated by individual IMUs are similar have been manufactured in large quantities, and therefore, interference is easily generated and the IMUs are susceptible to the beat noise caused by the interference.

In particular, the present disclosure is made in light of such a situation, and is intended to reduce an influence of the beat noise caused by the interference between individual IMUs constituting a multi-IMU, and realize a high-precision multi-IMU.

### [Solution to Problem]

An inertial measurement apparatus of one aspect of the present disclosure is an inertial measurement apparatus including: a predetermined number of mounting portions configured to have a single inertial measurement unit (IMU) mounted thereon; and the predetermined number of connection portions configured to connect one of the mounting portions to an edge of an opening provided on a board, wherein the connection portion is less rigid than the board.

In the aspect of the present disclosure, the predetermined number of mounting portions for mounting one inertial measurement unit (IMU) are connected to the edge of the opening provided on the board by the predetermined number of connection portions, and the connection portion is less rigid than the board.

### [Brief Description of Drawings]

[Fig. 1]

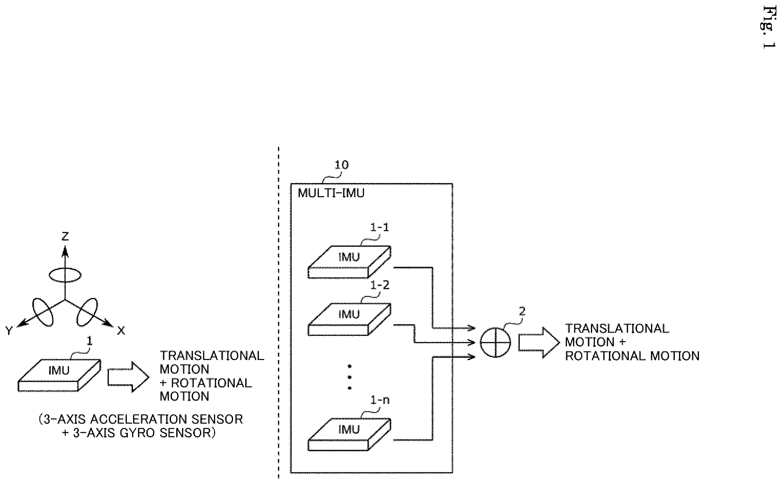

   Fig. 1 is a diagram illustrating a multi-IMU.
[Fig. 2]

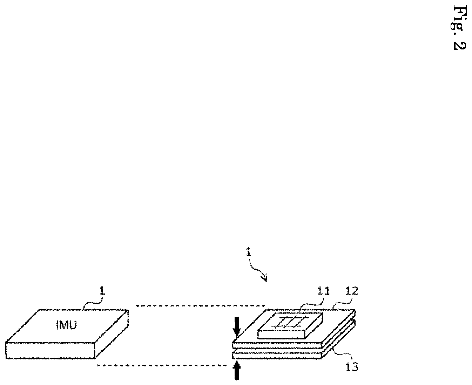

   Fig. 2 is a diagram illustrating a structure of an IMU.
[Fig. 3]

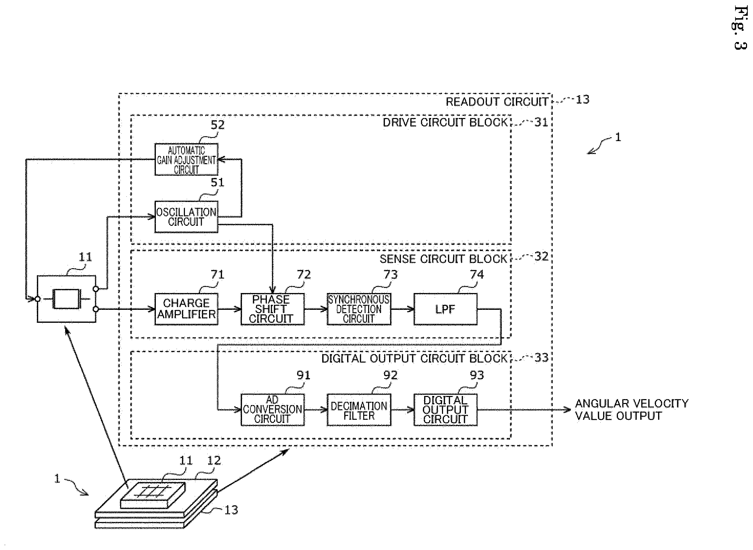

   Fig. 3 is a diagram illustrating a circuit configuration of a readout circuit of the IMU in Fig. 2.
[Fig. 4]

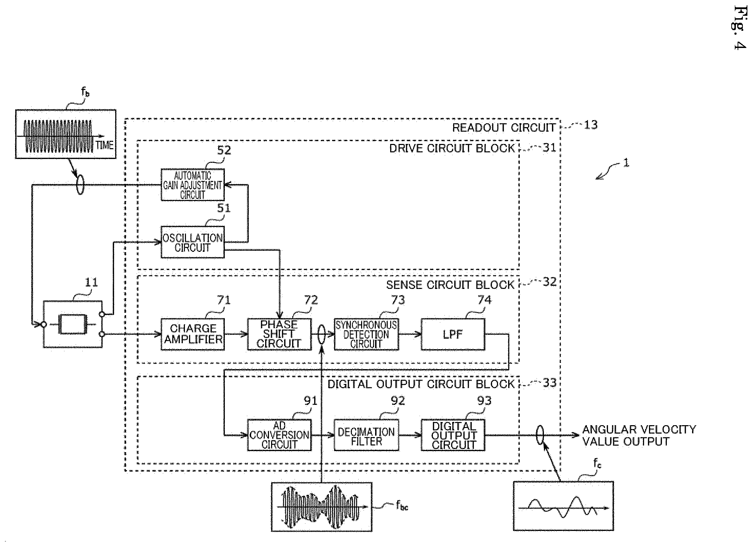

   Fig. 4 is a diagram illustrating an operation of the IMU in Fig. 2.
[Fig. 5]

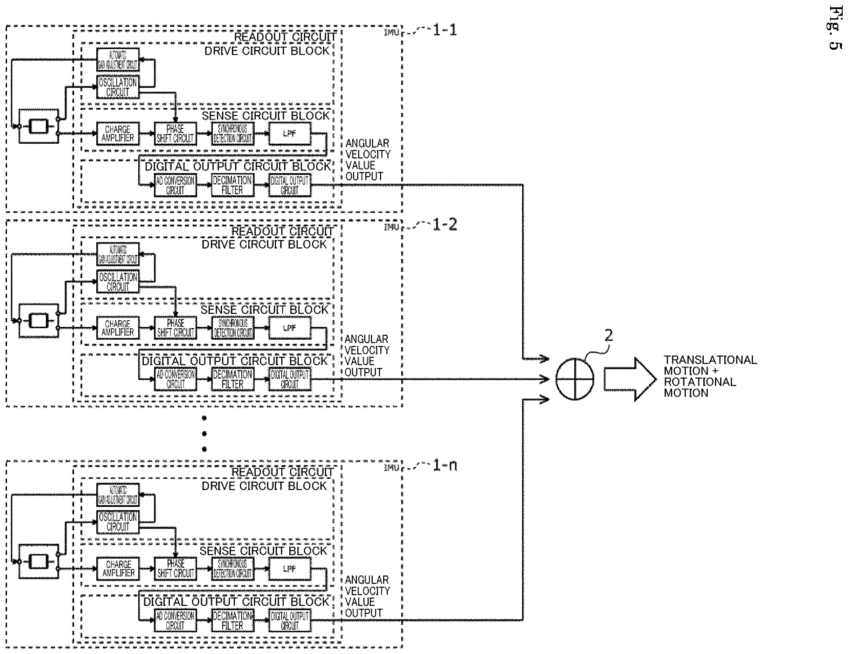

   Fig. 5 is a diagram illustrating an operation of the multi-IMU.
[Fig. 6]

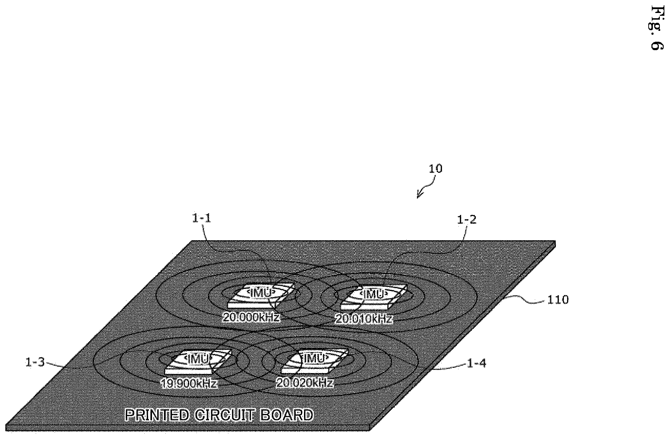

   Fig. 6 is a diagram illustrating an interference caused by the multi-IMU.
[Fig. 7]

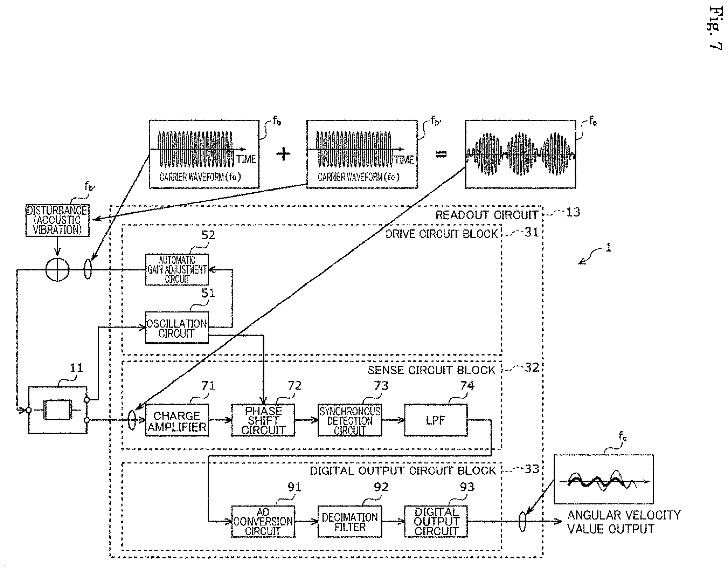

   Fig. 7 is a diagram illustrating an interference caused by the multi-IMU.
[Fig. 8]

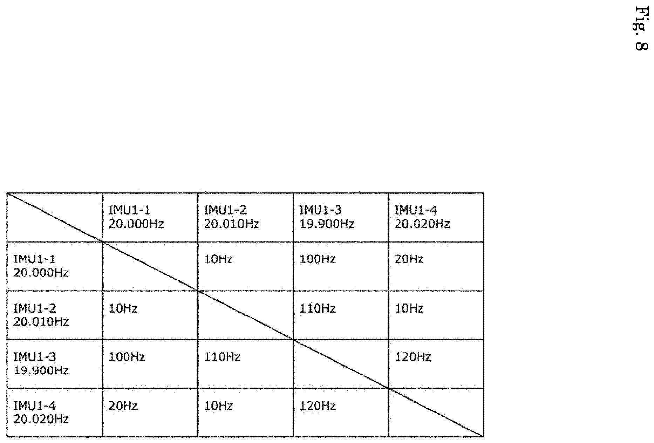

   Fig. 8 is a diagram illustrating an interference caused by the multi-IMU.
[Fig. 9]

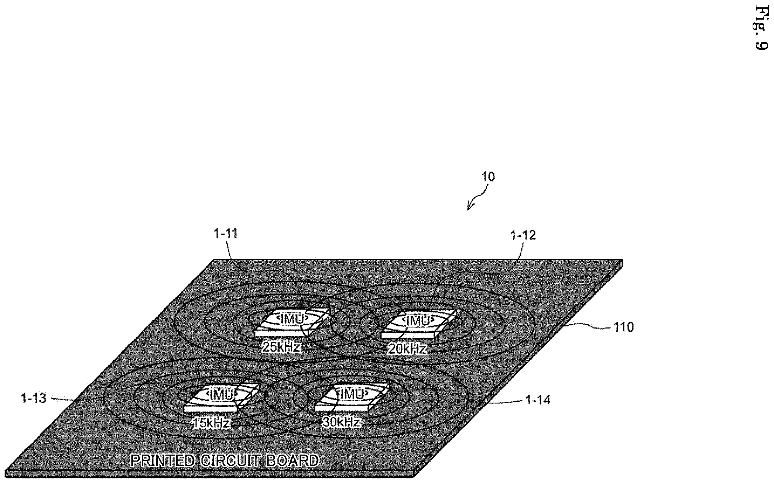

   Fig. 9 is a diagram illustrating a method of curbing the interference caused by the multi-IMU.
[Fig. 10]

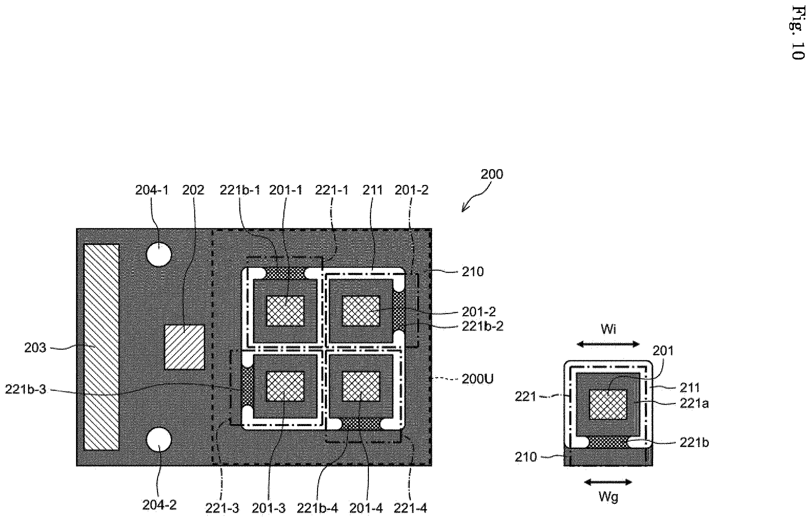

   Fig. 10 is a diagram illustrating a first embodiment of the multi-IMU of the present disclosure.
[Fig. 11]

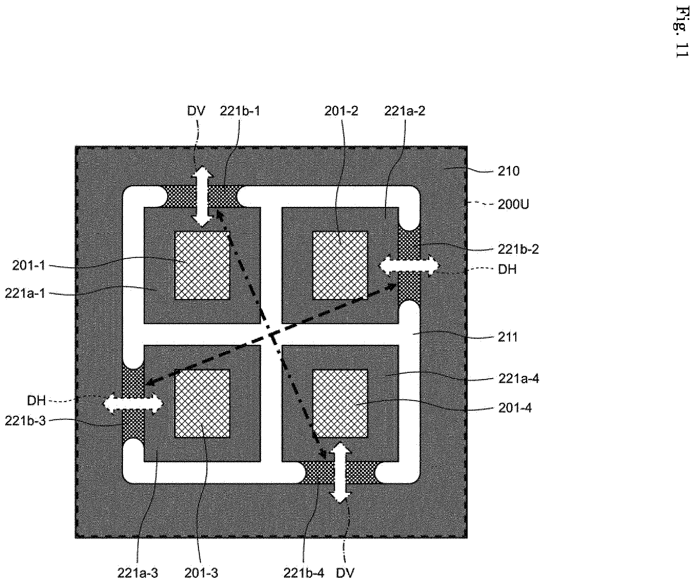

   Fig. 11 is a diagram illustrating a structure in which a beat of the multi-IMU in Fig. 10 is curbed.
[Fig. 12]

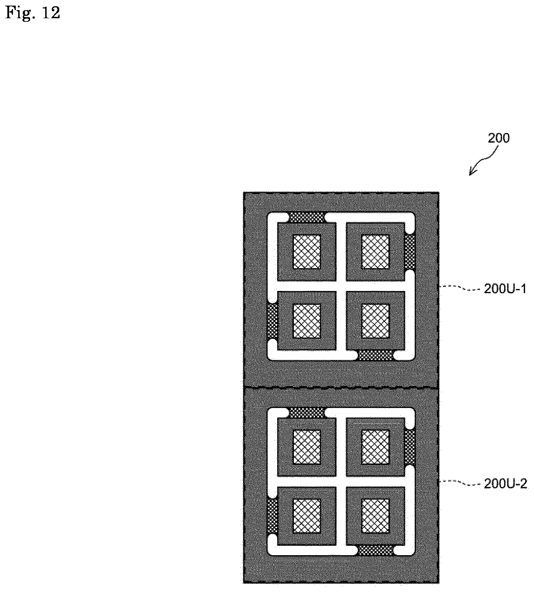

   Fig. 12 is a diagram illustrating a first modification example of the first embodiment of the multi-IMU of the present disclosure.
[Fig. 13]

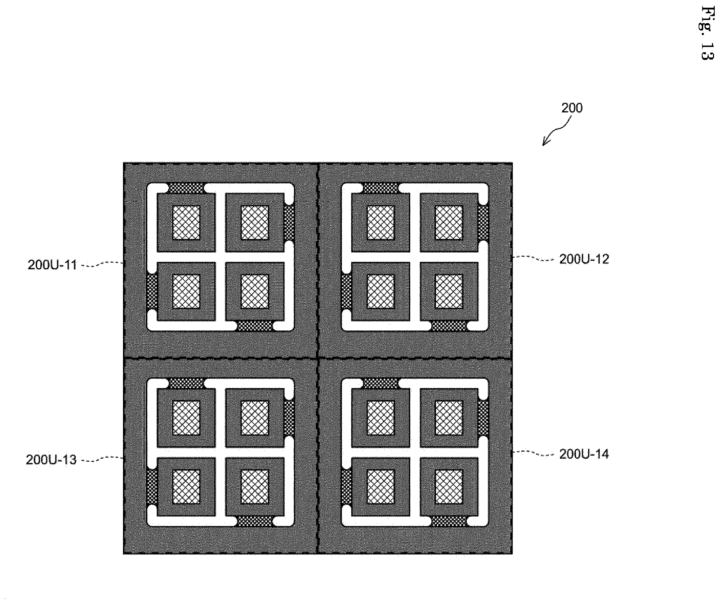

   Fig. 13 is a diagram illustrating a second modification example of the first embodiment of the multi-IMU of the present disclosure.
[Fig. 14]

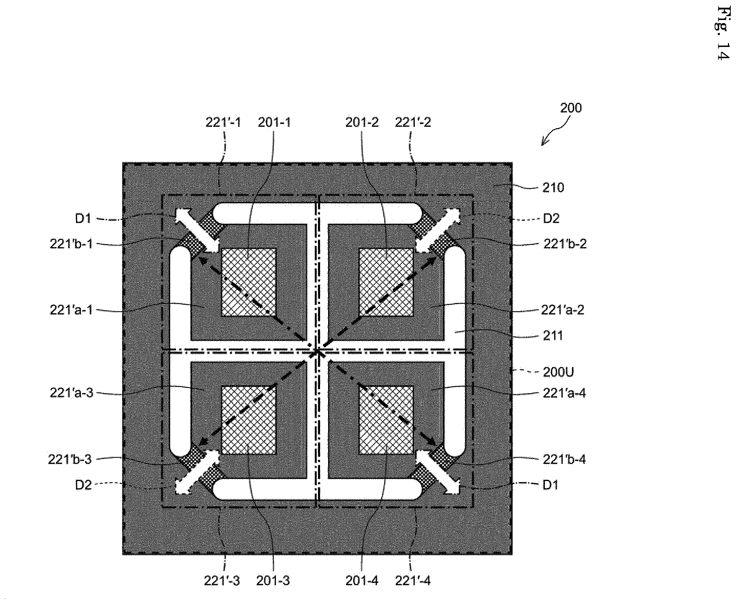

   Fig. 14 is a diagram illustrating a third modification example of the first embodiment of the multi-IMU of the present disclosure.
[Fig. 15]

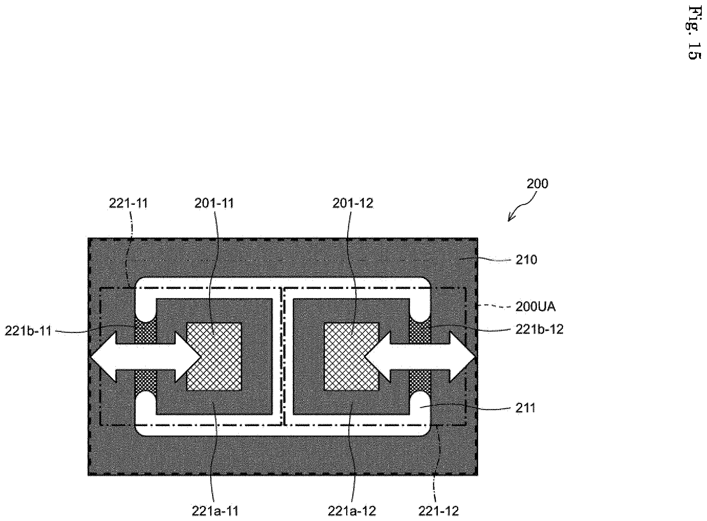

   Fig. 15 is a diagram illustrating a first example of a second embodiment of the multi-IMU of the present disclosure.
[Fig. 16]

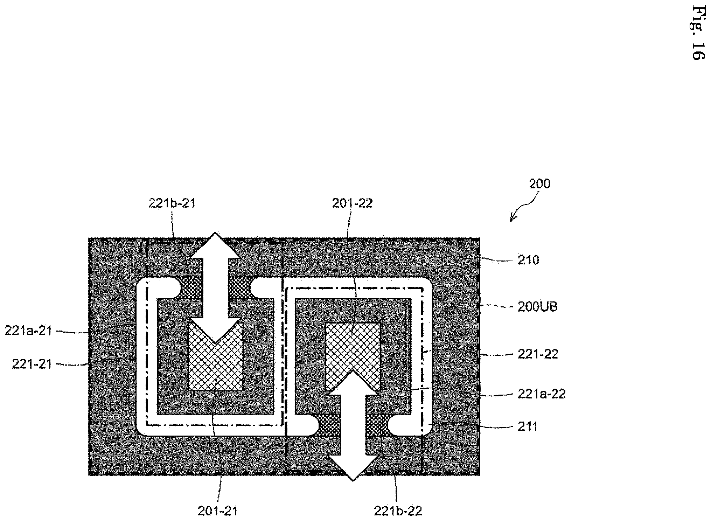

   Fig. 16 is a diagram illustrating a second example of the second embodiment of the multi-IMU of the present disclosure.
[Fig. 17]

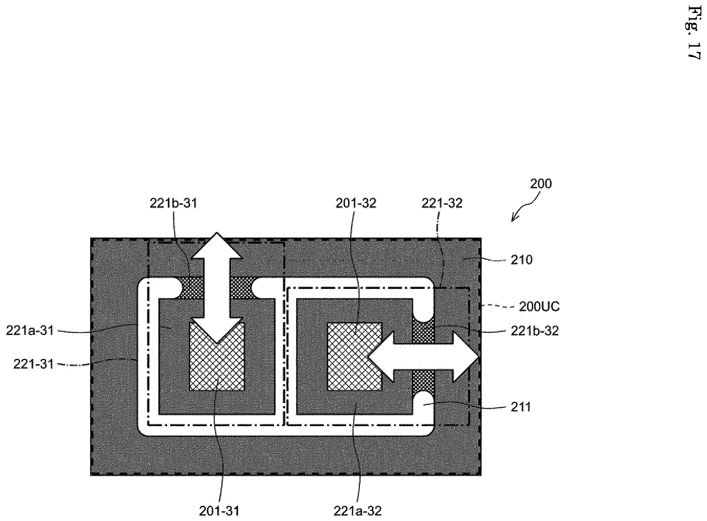

   Fig. 17 is a diagram illustrating a third example of the second embodiment of the multi-IMU of the present disclosure.
[Fig. 18]

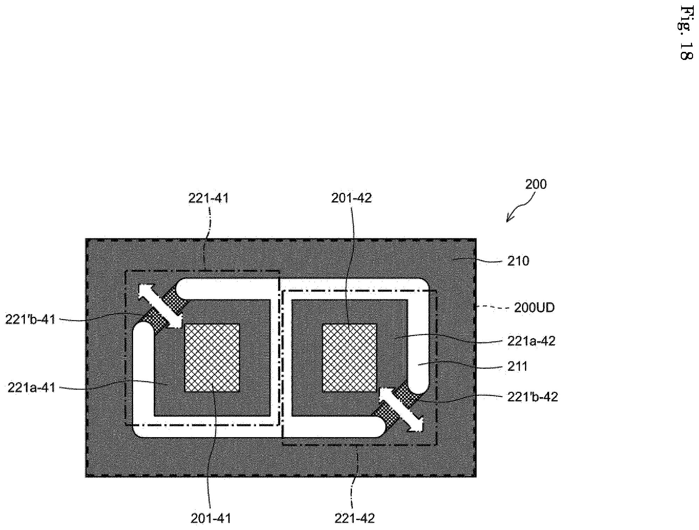

   Fig. 18 is a diagram illustrating a fourth example of the second embodiment of the multi-IMU of the present disclosure.
[Fig. 19]

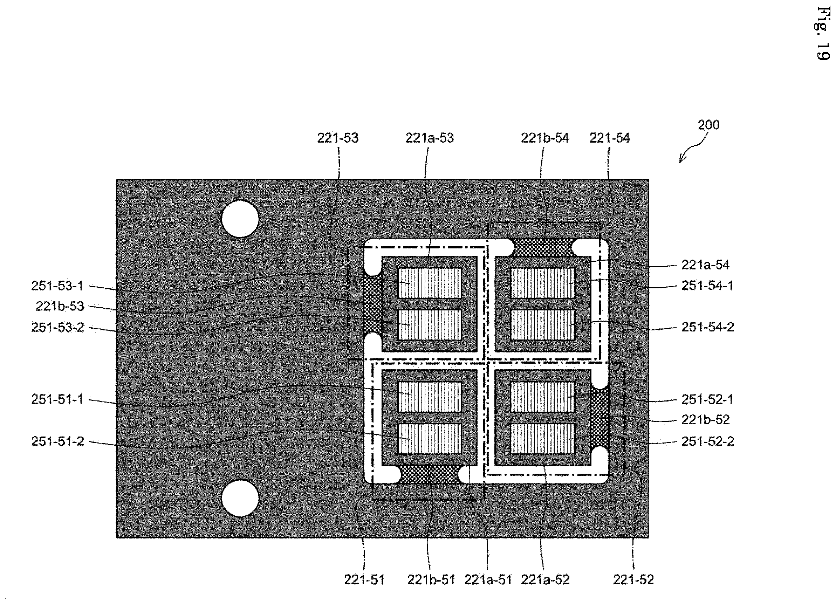

   Fig. 19 is a diagram illustrating a first example of a third embodiment of the multi-IMU of the present disclosure.
[Fig. 20]

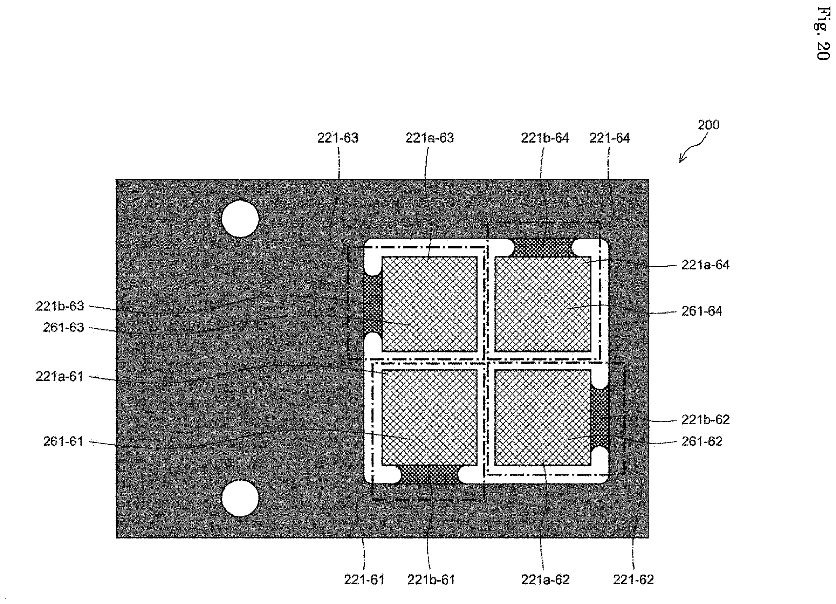

   Fig. 20 is a diagram illustrating a second example of the third embodiment of the multi-IMU of the present disclosure.
[Fig. 21]

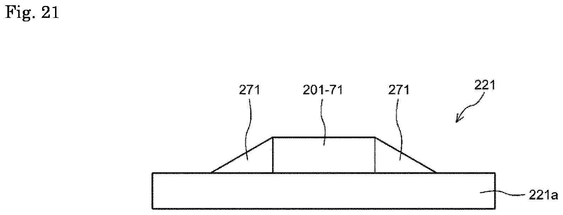

   Fig. 21 is a diagram illustrating a fourth embodiment of the multi-IMU of the present disclosure.
[Fig. 22]

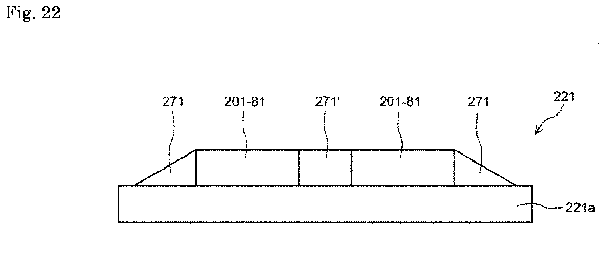

   Fig. 22 is a diagram illustrating the fourth embodiment of the multi-IMU of the present disclosure.
[Fig. 23]

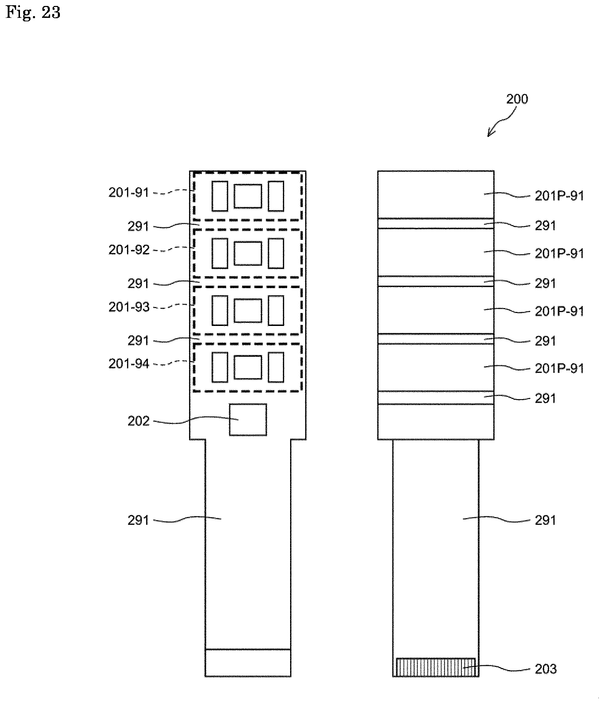

   Fig. 23 is a diagram illustrating a fifth embodiment of the multi-IMU of the present disclosure.
[Fig. 24]

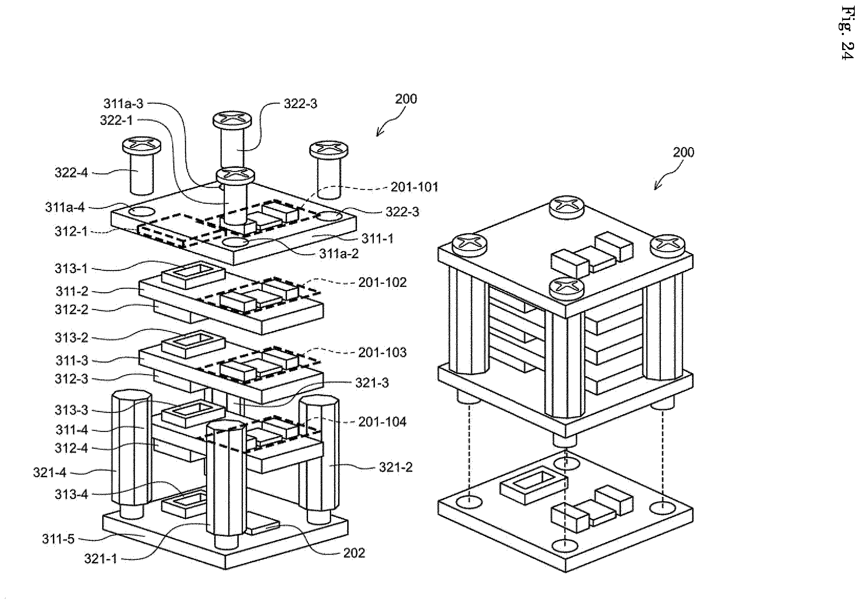

   Fig. 24 is a diagram illustrating a sixth embodiment of the multi-IMU of the present disclosure.
[Fig. 25]

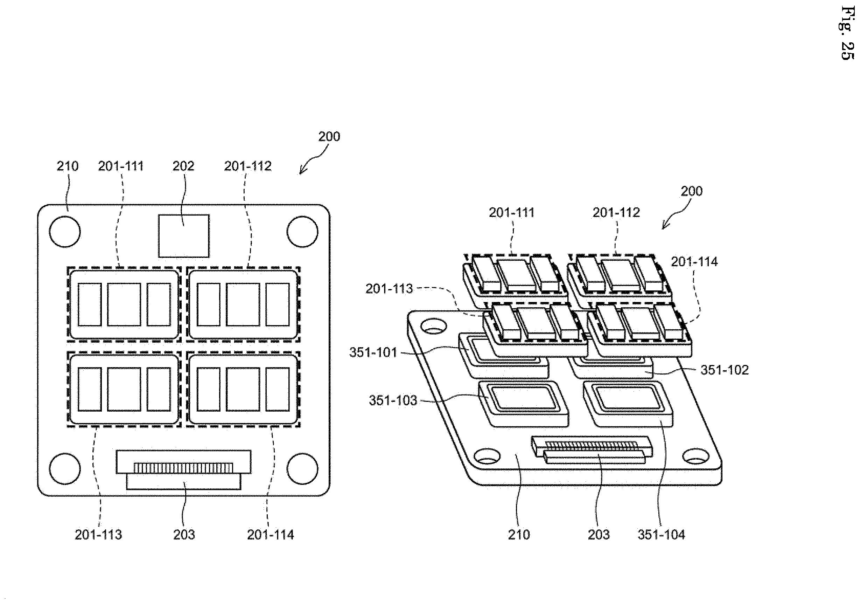

   Fig. 25 is a diagram illustrating a seventh embodiment of the multi-IMU of the present disclosure.
[Fig. 26]

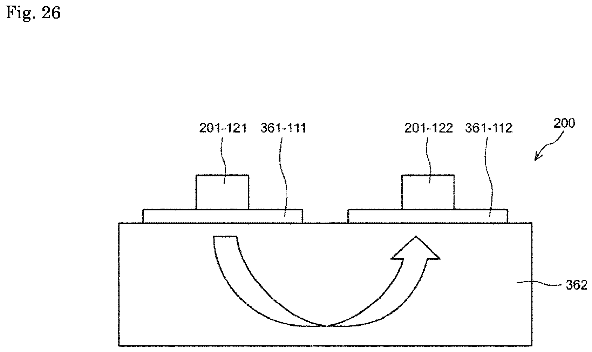

   Fig. 26 is a diagram illustrating an eighth embodiment of the multi-IMU of the present disclosure.

### [Description of Embodiments]

Hereinafter, preferred embodiments of the present disclosure will be described in detail with reference to the accompanying drawings. In the present specification and the drawings, components having substantially the same functional configuration will be denoted by the same reference signs, and repeated description thereof will be omitted.

Hereinafter, a mode for implementing the present technology will be described. Description will be given in the following order.
1. Overview of Present Disclosure
2. First Embodiment
3. Second Embodiment
4. Third Embodiment
5. Fourth Embodiment
6. Fifth Embodiment
7. Sixth Embodiment
8. Seventh Embodiment
9. Eighth Embodiment

### <<1. Overview of Present Disclosure>>

### <Multi-IMU>

The present disclosure is intended to, particularly, reduce an influence of beat noise caused by interference between individual IMUs constituting a multi-inertial measurement unit (IMU), and realize a high-precision multi-IMU.

First, the multi-IMU will be described when an overview of the present disclosure is described.

As shown in a left portion of Fig. 1, an IMU 1 as a single unit includes, for example, an acceleration sensor that detects an acceleration that is a translational motion in each of three axial directions consisting of an XYZ axis, and a gyro sensor that detects an angular velocity that is a rotational motion, to detect the acceleration and the angular velocity in each of the three axial directions.

Although there is also a high-precision IMU 1 as a single unit, a high-precision IMU is generally large and expensive, and the IMU becomes large and a cost thereof increases for high precision.

As shown in a right portion of Fig. 1, a plurality (for example, n) low-precision but inexpensive IMUs 1 are provided such as IMUs 1-1 to 1-n, and a combiner 2 combines accelerations and angular velocities that are detection results of the IMUs 1-1 to 1-n, thereby reducing a noise density and bias fluctuation to 1/√n, achieving improvement of detection precision, and realizing high precision, resulting in a multi-IMU 10.

An apparatus size and apparatus cost related to the individual low-precision and inexpensive IMUs 1-1 to 1-n constituting the multi-IMU 10 shown in the right portion of Fig. 1 can be sufficiently reduced as compared to an apparatus size and an apparatus cost when a high-precision IMU 1 as shown in a left portion of Fig. 1 is prepared as a single unit, and it is also possible to realize cost reduction.

Hereinafter, the IMUs 1-1 to 1-n will be simply referred to as IMU 1 unless there is a need to particularly distinguish the IMUs 1-1 to 1-n, and other configurations will also be referred to in the same manner. Further, in the present specification, although the IMU 1 is hereinafter assumed to be a small, inexpensive, and relatively low-precision IMU, the IMU 1 may be a large, expensive, and highly accurate IMU.

### <Structure of IMU>

Next, a structure of the IMU 1 will be described with reference to Fig. 2.

As shown on the right portion of Fig. 2, the individual IMUs 1 constituting the multi-IMU 10 include a silicon vibrator 11, a base 12 that fixes the vibrator 11, and a readout circuit 13 that reads a vibration of the vibrator 11 and outputs an angular velocity from the top in the figure, and these are adhered (bonded) in order shown on a right portion of Fig. 2 and integrated by resin molding as shown in a left portion of Fig. 2.

### <Circuit Configuration of Readout Circuit>

Next, a circuit configuration of the readout circuit 13 will be described in the IMU 1 with reference to Fig. 3.

Fig. 3 illustrates a configuration for detecting an angular velocity in the read circuits constituting the IMU 1. Since the configuration for detecting the acceleration in the IMU 1 is a configuration in which a detection circuit is excluded from the configuration for detecting the angular velocity, a configuration for detecting a more complicated angular velocity will be specifically described.

The readout circuit 13 includes a drive circuit block 31, the sense circuit block 32, and the digital output circuit block 33.

The drive circuit block 31 supplies an oscillation signal at a predetermined drive frequency to the vibrator 11 configured of micro electro mechanical systems (MEMS), and the sense circuit block 32, and vibrates the vibrator 11 on the basis of the oscillation signal.

The sense circuit block 32 detects a vibration generated according to the coriolis force acting on the vibrator 11 that vibrates on the basis of the oscillation signal, as an analog signal, and outputs the analog signal to the digital output circuit block 33.

The digital output circuit block 33 converts the vibration generated according to the coriolis force acting on the vibrator 11 supplied from the sense circuit block 32 from the analog signal to a digital signal and outputs the digital signal as an angular velocity.

More specifically, the drive circuit block 31 includes an oscillation circuit 51 and an automatic gain adjustment circuit 52.

The oscillation circuit 51 is configured of RC and generates an oscillation signal using the vibration supplied from the vibrator 11 as a reference signal and outputs the oscillation signal to the automatic gain adjustment circuit 52 and the phase shift circuit 72 of the sense circuit block 32.

The automatic gain adjustment circuit 52 adjusts a gain of the oscillation signal at the drive frequency supplied from the oscillation circuit 51 and supplies the oscillation signal to the vibrator 11 to vibrate the vibrator 11.

The sense circuit block 32 includes a charge amplifier circuit 71, a phase shift circuit 72, a synchronous detection circuit 73, and an LPF 74.

The charge amplifier circuit 71 detects the vibration of the vibrator 11 as a vibration signal, amplifies the vibration signal, and supplies the resultant vibration signal to the phase shift circuit 72.

The phase shift circuit 72 adjusts the phase of the vibration signal of the vibrator 11 detected by the charge amplifier circuit 71 on the basis of the oscillation signal supplied from the oscillation circuit 51 and outputs the vibration signal to the synchronous detection circuit 73.

The synchronous detection circuit 73 detects a waveform indicating the coriolis force acting on the vibrator 11 expressed by an envelope from the vibration signal of the vibrator 11 whose phase has been adjusted and outputs the waveform to the LPF 74.

The LPF 74 smoothes the waveform indicating the coriolis force acting on the vibrator 11 and outputs the waveform to the digital output circuit block 33 as information on the angular velocity consisting of an analog signal.

The digital output circuit block 33 includes an AD conversion circuit 91, a decimation filter 92, and a digital output circuit 93.

The AD conversion circuit 91 converts the information on the angular velocity configured of the coriolis force acting on the vibrator 11 configured of an analog signal into a digital signal and outputs the digital signal to the decimation filter 92.

The decimation filter 92 averages the information on the angular velocity configured of a digital signal and outputs the information to the digital output circuit 93.

The digital output circuit 93 outputs digitalized and averaged angular velocity information as a digital signal.

### <Operation of IMU>

Next, an operation of the IMU 1 will be described with reference to Fig. 4.

As shown in an upper left portion of Fig. 4, the vibrator 11 oscillates by means of the oscillation circuit 51 and vibrates on the basis of the reference signal consisting of the oscillation signal at a drive frequency fb whose gain has been adjusted by the automatic gain adjustment circuit 52.

In this case, when the coriolis force acts on the vibrator 11, amplitude modulation according to the coriolis force is applied, and a waveform output from the charge amplifier circuit 71 undergoes amplitude modulation according to the coriolis force as shown by a waveform fbc, for the drive frequency fb, for example.

The synchronous detection circuit 73 detects the amplitude modulation according to the coriolis force as a waveform of an analog signal indicating the coriolis force, that is, the angular velocity, from an envelope of the waveform fbc and outputs the waveform to the LPF 74.

A waveform of an analog signal extracted as the coriolis force is converted into a digital signal by the digital output circuit block 33 and output as a digitized angular velocity value.

In the multi-IMU, n IMUs 1 described above are collected and integrated, as shown in Fig. 5, for example, and the angular velocities detected by the IMUs 1-1 to 1-n are combined by the combiner 2, resulting in high-precision output.

### <Interference Caused by Plurality of IMUs>

The multi-IMU 10 is concretely configured as illustrated in Fig. 6, for example.

That is, in the multi-IMU 10 of Fig. 6, the IMU 1-1 to the IMU 1-4 are provided on a printed circuit board 110.

With such a configuration, the angular velocities detected by the IMU 1-1 to IMU 1-4 are combined in the multi-IMU 10 in Fig. 6 so that detection accuracy is improved, and output is performed.

Incidentally, it is known that the IMU 1 is manufactured with a variation of, for example, about 3% of the drive frequency due to individual differences in manufacturing.

Therefore, when IMU 1 is designed so that a drive frequency is 20.000 kHz, for example, IMU 1 is configured to be driven at the drive frequency of the IMU 1-1 of 20.000 kHz, at the drive frequency of the IMU 1-2 of 20.010 kHz, at the drive frequency of the IMU 1-3 of 19.900 kHz, and at the drive frequency of the IMU 1-1 of 20.020 kHz, as shown by the IMU 1-1 to IMU 1-4 in Fig. 6.

In such a case, since a frequency difference between the respective driving frequencies of the IMU 1-1 to the IMU 1-4 is small, interference is generated in the vibration of the vibrator 11.

More specifically, as illustrated in Fig. 7, for example, for the reference signal consisting of the oscillation signal at the drive frequency fb output via the automatic gain adjustment circuit 52 in the predetermined IMU 1, a reference signal consisting of a drive frequency fb' (≠ fb) of the other IMUs 1 present nearby becomes a disturbance (acoustic vibration), and interference occurs, and the reference signal actually supplied to the vibrator 11 undergoes amplitude modulation and is supplied to the vibrator 11 as an amplitude modulated signal fe including beats according to a frequency difference.

Accordingly, when the reference signal consisting of the drive frequency fb is supplied to the vibrator 11, a waveform fc in Fig. 7 is detected as the angular velocity, and the reference signal supplied to the vibrator 11 changes to an amplitude modulation signal fe due to disturbance, an angular velocity is detected as an amplitude modulation signal shown by a thick line in the figure for the waveform fc originally detected as an angular velocity, and therefore, an error occurs in the angular velocity.

Similarly, the beat is generated as a frequency vibration according to a frequency difference between the IMU 1-1 to the IMU 1-4.

That is, as illustrated in Fig. 8, the beat frequency of IMU 1-1 and IMU 1-2 is 10 Hz that is a drive frequency difference therebetween, the beat frequency of IMU 1-1 and IMU 1-3 is 100 Hz that is a drive frequency difference therebetween, and the beat frequency of IMU 1-1 and IMU 1-3 is 20 Hz that is a drive frequency difference therebetween.

Further, the beat frequency of the IMU 1-2 and the IMU 1-3 becomes 110 Hz that is a drive frequency difference therebetween, the beat frequency of the IMU 1-2 and the IMU 1-4 becomes 10 Hz that is a drive frequency difference therebetween, and the beat frequency of the IMU 1-3 and IMU 1-4 becomes 120 Hz that is drive frequency difference therebetween.

Accordingly, in the IMU 1-1 to the IMU 1-4, error vibrations in the beat frequency are superimposed due to the interference caused by each other's reference signals, and angular velocity including errors are detected in the IMU 1-1 to the IMU 1-4, and therefore, there was concern that an appropriate angular velocity could not be obtained even when the angular velocities are combined.

Therefore, for example, as shown in the multi-IMU 110 in Fig. 9, it is conceivable to curb the generation of beat by selecting four IMUs 1-11 to 1-14 having completely different driving frequencies.

In Fig. 9, the driving frequencies of the IMUs 1-11 to 1-14 are set to 25 kHz, 20 kHz, 15 kHz, and 30 kHz, respectively.

Thus, the generation of the beats is curbed by the respective IMUs 1-11 to 1-14 having completely different driving frequencies.

However, since it is necessary to manufacture the IMU 1 including at least four types of driving frequencies in constituting the multi-IMU 110, manufacturing costs are increased and variations of the driving frequencies are limited, and thus, the number of combinations is limited.

### <<2. First Embodiment>>

### <Example of Configuration of Multi-IMU of Present Disclosure>

Therefore, in the multi-IMU of the present disclosure, a shape of the board is devised so that a plurality of IMUs constituting a multi-IMU are disposed in an island structure, and therefore, interference caused by mutual vibrations is curbed and generation of the beat noise caused by the interference is curbed.

That is, in the multi-IMU 200 of the present disclosure illustrated in Fig. 10, the IMUs 201-1 to 201-4 are disposed on the printed circuit board 210.

Here, the printed circuit board 210 and the IMUs 201-1 to 201-4 in the multi-IMU 200 in Fig. 10 have a configuration corresponding to the printed circuit board 110 and the IMUs 1-1 to 1-4 in the IMU 10 in Fig. 6. Further, the number of IMUs 201 disposed on the printed circuit board 210 is not limited to the four IMUs 201-1 to 201-4 as illustrated in Fig. 10, but may be other numbers.

Further, a control integrated circuit (IC) 202 that controls the multi-IMU 200 and combines and outputting detection results of the IMUs 201-1 to 201-4, and a connector 203 that electrically connects the multi-IMU 200 to an external device are disposed on the printed circuit board 210 of the multi-IMU 200 in Fig. 10, in addition to the IMUs 201-1 to 201-4.

Further, screw holes 204-1 and 204-2 for joining the multi-IMU 200 to another board or the like (not shown) by screws or the like are provided on the printed circuit board 210 of the multi-IMU 200 in Fig. 10.

The IMUs 201-1 to 201-4 are provided in the island-like structure portions 221-1 to 221-4 provided on the right portion of the figure in the printed circuit board 210. One island-like structure portion 221 is extracted and illustrated on the right portion of Fig. 10.

The island-like structure portions 221-1 to 221-4 are structures within a range of a rectangular shape indicated by a single dotted line in the figure, and are formed in respective ranges when an approximately rectangular opening 211 provided on the printed circuit board 210, which is represented by a blanked portion in the figure, is roughly divided into four parts.

As shown on the right portion of Fig. 10, the individual island-like structure portion 221 includes the island portion 221a and a connection portion 221b, and the IMU 201 is disposed on the island portion 221a, in other words, the island portion 221a functions as a mounting portion on which the IMU 201 is mounted. A shape and size of each of the island portions 221a are approximately 1/4 of a shape and size of the opening 211. That is, island portions 221a-1 to 221a-4 are included in the opening 211.

An interval between the adjacent island portions 221a is set to be such a distance that the island portions 221a do not come into contact with each other due to thermal expansion or the like of a material. Further, an interval between each island portion 221a and each side of the opening 211 (an edge of the opening 211) is also set to be such a distance that each island portion 221a and each side of the opening 211 do not come into contact with each other due to thermal expansion or the like of the material. In the board 210, after the rectangular opening 211 is formed, each island portion 221a is not connected to the edge of the opening 211 through the connection portion 221b, and the island portion 221a and the connection portion 221b are formed by cutting the blanked part in the opening 211 in Fig. 10 into a slit shape by a router. Therefore, the interval between the adjacent island portions 221a is about a size of an outer shape of the router that excavates the board 210.

The connection portion 221b connects a part of a portion on the right side of a center position of each side (each edge) constituting the opening 211 to a part of the island portion 221a when the approximately square opening 211 represented by the blanked portion in the figure is viewed from an outer circumferential portion, so that the island portion 221a is connected to the printed circuit board 210.

With such a configuration, the island-like structure portions 221-1 to 221-4 are disposed so that disposition directions of the island-like structure portions 221-1 to 221-4 are rotated clockwise by 90 degrees when viewed in clockwise order in the figure.

The clockwise order of the island-like structure portions 221-1 to 221-4, specifically, means an order of the island-like structure portion 221-1, the island-like structure portion 221-2, the island-like structure portion 221-4, and the island-like structure portion 221-3 when the island-like structure portion 221-1 is a starting point.

That is, the island-like structure portion 221-1 is disposed so that the connection portion 221b-1 is in an up direction of the figure, the island-like structure portion 221-2 is disposed so that the connection portion 221b-2 is in a right direction of the figure, the island-like structure portion 221-4 is disposed so that the connection portion 221b-4 is in a down direction in the figure, and the island-like structure portion 221-3 is disposed so that the connection portion 221b-3 is in a left direction in the figure.

The connection portion 221b may connect a portion to the left of the center position of each side of the opening 211 to the island portion 221a when the approximately square opening 211 represented by the blanked portion in the figure is viewed from the outer circumferential portion so that the island portion 221a is connected to the printed circuit board 210.

The connection portion 221b is provided with a wiring (not shown) connected to the IMU 201 installed in the island portion 221a, physically connects the IMU 201 to the printed circuit board 210, and electrically connects the IMU 201 to the printed circuit board 210.

The connection portion 221b is configured to be less rigid than the island portion 221a, and has a configuration in which the vibration in the printed circuit board 210 is difficult to propagate to the island portion 221a. More specifically, a width Wg of the connection portion 221b is smaller than a width Wi of the island portion 221a and the connection portion 221b is thin, so that the rigidity of the connection portion 221b is lower than that of the island portion 221a. With such a configuration, the rigidity of the connection portion 221b is lower than that of the island portion 221a even though the connection portion 221b and the island portion 221a are of the same material. Further, since the connection portion 221b is smaller than the printed circuit board 210, the rigidity of the connection portion 221b is lower than that of the printed circuit board 210.

That is, since drive vibration between the IMUs 201-1 to 201-4 is difficult to propagate through the printed circuit board 210 due to a configuration (formation) of the connection portion 221b with less rigidity than the rigidity of the island portion 221a and the printed circuit board 210 between the island portion 221a and the printed circuit board 210, it is possible to curb the interference of the drive vibration between the IMUs 201-1 to 201-4 and, as a result, to curb generation of the beat noise caused by the interference.

The width Wi of the connection portion 221b is minimized for formation of a wiring connected to the IMU 201, so that rigidity of the connection portion 221b can be further reduced, and drive vibration of the IMUs 201-1 to 201-4 propagating through the printed circuit board 210 can be more difficult to propagate to the island portion 221a.

That is, since the rigidity can be reduced by making the width Wi of the connection portion 221b smaller, it is possible for the drive vibration between the IMUs 201-1 to 201-4 to be made difficult to propagate, and as a result, it is possible to curb generation of the beat noise due to curbed interference between the IMUs 201-1 to 201-4.

Further, in a structure illustrated in Fig. 11, the island-like structure portions 221 to which drive vibration propagating through the printed circuit board 210 is applied from the same direction among the island-like structure portions 221-1 to 221-4 are provided with the connection portions 221b at positions apart from each other.

Because of such a structure, propagation of drive vibrations in the same direction is made difficult, and this makes it possible to curb generation of the beat noise due to curbed interference.

More specifically, as illustrated in Fig. 11, the island portions 221a-1 and 221a-4 of the island-like structure portions 221-1 and 221-4 among the island-like structure portions 221-1 to 221-4 are connected to the printed circuit board 210 through the connection portions 221b-1 and 221b-4, and it is easy for the vibration from the printed circuit board 210 to be propagated to the island portions 221a-1 and 221a-4 through the connection portions 221b-1 and 221b-4 in a direction of an arrow DV in the figure.

For example, when both of the connection portions 221b-1 and 221b-4 are disposed to be close to each other, both vibrations are easily propagated, and as a result, interference is generated between the IMUs 201-1 and 201-4 to cause the beat noise.

On the other hand, in a structure of the multi-IMU 200 of the present disclosure, as illustrated in Fig. 11, both the connection portions 221b-1 and 221b-4 are disposed on the opposite side of the substantially square opening 211 at points symmetrical positions with a center position of the opening 211 as a reference, and disposed at separate positions on the printed circuit board 210 that propagates vibrations, as indicated by a dashed-dotted arrow.

Although a propagation distance is longer, the vibration is further attenuated, it is difficult to propagate vibration between the connection portions 221b-1 and 221b-4 since a distance between the connection portions 221b-1 and 221b-4 is disposed at a separate position in the printed circuit board 210 as described above.

That is, with such a structure, it is possible to curb interference between the IMUs 201-1 and 201-4 and to curb generation of the beat noise caused by the interference.

Further, as illustrated in Fig. 11, the island portions 221a-2 and 221a-3 of the island-like structure portions 221-2 and 221-3 among the island-like structure portions 221-1 to 221-4 are connected to the printed circuit board 210 via the connection portions 221b-2 and 221b-3, and it is easy for the vibration from the printed circuit board 210 to be propagated to the island portions 221a-2 and 221a-3 via the connection portions 221b-2 and 221b-3 in the direction of the arrow DV in the figure.

For the connection portions 221b-2 and 221b-3, as illustrated in Fig. 11, both the connection portions 221b-2 and 221b-2 are disposed on the opposite side of the substantially square opening 211 at points symmetrical positions with the center position of the opening 211 as a reference, and disposed at separate positions on the printed circuit board 210 that propagates vibrations, as indicated by a dotted arrow, similar to the connection portions 221b-1 and 221b-4.

That is, with such a structure, it is possible to curb interference between the IMUs 201-2 and 201-3, like between the IMUs 201-1 and 201-4, and to curb generation of the beat noise caused by the interference.

Fig. 11 shows only an extracted range where the island-like structure portions 221-1 to 221-4 surrounded by a rectangular dotted line in Fig. 10 are disposed in the multi-IMU 200 in Fig. 10. Afterwards, a range in which the island-like structure portions 221-1 to 221-4 are disposed is simply called an IMU disposition unit 200U.

Further, although an example in which the opening 211 has an approximate square shape and an island portion 211a has a shape having an approximate 1/4 size of the opening 211 has been described, the shape does not necessarily have to be square or rectangle, and the island portion 211a that can be accommodated in the opening 211 and on which the IMU 201 can be mounted may be formed.

Therefore, for example, a plurality of round island portions 211a having size allowing the IMU 201 to be mounted on the island portions 211a and allowing the island portions 211a to be accommodated in the opening 211 may be formed in the rectangular opening 211 or the island portions 211a having other shapes may be formed.

However, when the connection portions 211b connecting the respective island portions 211a to the edge of the opening 211 are disposed so that a physical distance between the connection portions 211b increases, vibrations propagating in the printed circuit board 210 therebetween are attenuated and the interference is curbed so that an effect of reducing the beat noise caused by the interference can be enhanced, and therefore, it is preferable that the connection portions 211b be disposed at a larger distance.

### <Modification Example 1>

Although the example of the configuration of the multi-IMU 200 including four IMUs 201 has been described above, the number of IMUs 201 may be 4 or more, and for example, two IMU disposition units 200U in Fig. 11 may be disposed side by side, as illustrated in Fig. 12 for the multi-IMU 200 with eight IMUs 201 as a unit.

In Fig. 12, an example in which IMU disposition units 200U-1 and 200U-2 are disposed side by side in a vertical direction in Fig. 12 is shown, but needless to say, the IMU disposition units 200U-1 and 200U-2 may be disposed side by side in the horizontal direction, or two or more IMU disposition units 200U-1 and 200U-2 may be disposed side by side.

Even in such a configuration, similarly, it is possible to curb interference of drive vibration between a plurality of IMUs 201, and to curb generation of the beat noise caused by the interference.

### <Modification Example 2>

Further, for example, for the multi-IMU 200 with 16 IMUs 201 as a unit, for example, the two IMU disposition units 200U in Fig. 11 may be disposed side by side in horizontal and vertical directions, as illustrated in Fig. 13.

Fig. 13 shows an example in which two IMU disposition units 200U are disposed side by side in horizontal and vertical directions of the figure, as shown by IMU disposition units 200U-11 to 200U-14.

Even in such a configuration, similarly, it is possible to curb interference of drive vibration between the plurality of IMUs 201, and to curb the generation of the beat noise caused by the interference.

Further, even in such a configuration in which more IMU disposition units 200U are disposed side by side in the horizontal and vertical directions, it is possible to similarly curb generation of the beat noise.

### <Modification Example 3>

Although the example of the configuration in which the connection portion 221b connects the part of the portion on the right side of the center position of each side (each edge) constituting the opening 211 to part portion of the island portion 221a when the approximately square opening 211 represented by the blanked portion in the figure is viewed from the outer circumferential portion has been described above, the connection portion 221b may be provided at the corner portion of the opening 211.

Fig. 14 shows an example of a configuration of the multi-IMU 200 in which the connection portion 221b is provided at each of four corner portions of the opening 211.

In the multi-IMU 200 of Fig. 14, configurations including the same function as the multi-IMU 200 in Fig. 11 are denoted by the same reference signs, and description will be appropriately omitted.

That is, a difference between the multi-IMU 200 in Fig. 14 and the multi-IMU 200 in Fig. 11 is that island-like structure portions 221'-1 to 221'-4 are provided instead of the island-like structure portions 221-1 to 221-4.

Basically, the island-like structure portions 221'-1 to 221'-4 are provided with the IMUs 201-1 to 201-4, similar to the island-like structure portions 221-1 to 221-4, and basic functions are the same, but structures thereof are different.

That is, the island-like structure portions 221'-1 to 221'-4 are configured of island portions 221'a-1 to 221'a-4 and connection portions 221'b-1 to 221'b-4, respectively.

The connection portions 221'b-1 to 221'b-4 connect the printed circuit board 210 to corner portions of the island portions 221'a-1 to 221'a-4 through four corner portions of the opening 211, respectively.

As illustrated in Fig. 14, since the island-like structure portions 221' to which vibrations propagating from the printed circuit board 210 are easily applied from the same direction among the island-like structure portions 221'-1 to 221'-4 have a structure in which the connection portions 221'b are disposed at separate positions, it is difficult for the vibrations to propagate in the same direction, and interference of the vibrations can be curbed, and thus, it is possible to curb generation of the beat noise caused by the interference.

More specifically, in a structure illustrated in Fig. 14, the island portions 221'a-1 and 221'a-4 of the island-like structure portions 221'-1 and 221'-4 among the island-like structure portions 221'-1 to 221'-4 are connected to the printed circuit board 210 via the connection portions 221'b-1 and 221'b-4, respectively, and it is easy for the vibration from the printed circuit board 210 to be propagated to the island portions 221'a-1 and 221'a-4 in a direction of arrow D1 in the figure via the connection portions 221'b-1 and 221'b-4.

For example, when both of the connection portions 221'b-1 and 221'b-4 are disposed to be close to each other, both vibrations are easily propagated, and as a result, interference between the IMUs 201-1 and 201-4 is generated and this causes the beat noise caused by the interference.

On the other hand, in the multi-IMU 200 of the present disclosure, as illustrated in Fig. 14, both the connection portions 221'b-1 and 221'b-4 are disposed on a diagonal line of the opening 211 and are disposed in the furthest positions on the opening 211 in the printed circuit board 210 propagating vibrations, as indicated by a dashed-dotted arrow.

Therefore, a structure in which the vibration is difficult to propagate between the island-like structure portions 221'-1 and 221'-4 is adopted, so that it is possible to curb interference due to vibration between the IMUs 201-1 and 201-4, and to curb generation of the beat noise caused by the interference.

Similarly, in a structure illustrated in Fig. 14, the island portions 221'a-2 and 221'a-3 of the island-like structure portions 221'-2 and 221'-3 among the island-like structure portions 221'-1 to 221'-4 are connected to the printed circuit board 210 via the connection portions 221'b-2 and 221'b-3, respectively, and it is easy for vibration from the printed circuit board 210 to be propagated to the island portions 221'a-2 and 221'a-3 in a direction of arrow D2 in the figure via the connection portions 221'b-2 and 221'b-3.

That is, both the connection portions 221'b-2 and 221'b-3 are disposed on the diagonal line of the opening 211 and are disposed in the furthest positions on the opening 211 in the printed circuit board 210 propagating vibrations, as indicated by a dotted arrow in Fig. 14, similar to the connection portions 221'b-1 and 221'b-4.

Therefore, a structure in which the vibration is difficult to propagate between the island-like structure portions 221'-2 and 221'-3 is adopted, so that it is possible to curb interference due to vibration between the IMUs 201-2 and 201-3, and to curb generation of the beat noise caused by the interference.

Even when the IMU disposition unit 200U as shown in Fig. 14 is also disposed as shown in Figs. 12 and 13 so that not only 4 IMUs 201 but also other numbers (such as 8 or 16) of IMUs are used, the same effects can be achieved.

### <<3. Second Embodiment>>

### <Part 1>

Although an example of a configuration of the multi-IMU 200 configured of four island-like structure portions 221 as a unit has been described above, the multi-IMU 200 may be configured with the other number as a unit, and for example, the multi-IMU 200 may be configured with two island-like structure portions 221 as a unit.

Fig. 15 illustrates an example of a configuration of the multi-IMU 200 configured with two island-like structure portions 221 as a unit.

The multi-IMU 200 in Fig. 15 is configured of island-like structure portions 221-11 and 221-12, the island portion 221a-11 and the island portion 221a-12 are adjacent to each other, and a connection portion 221b-11 and an island portion 221b-12 are provided in a part on the opposite side of the opening 211 with the island portion 221a-11 and the island portion 221a-12 interposed therebetween. In the multi-IMU 200 in Fig. 15, the opening 211 is configured in a rectangular shape long in a horizontal direction in the figure.

Thus, in a structure of the multi-IMU 200 of Fig. 15, both the connection portions 221b-11 and 221b-12 are disposed on the short side constituting the opposite side of the opening 211 and are disposed at the furthest positions in the opening 211 of the printed circuit board 210 propagating vibrations.

Therefore, a structure in which the vibration is difficult to propagate between the island-like structure portions 221-11 and 221-12 is adopted, so that it is possible to curb interference due to vibration between the IMUs 201-11 and 201-12, and to curb generation of the beat noise caused by the interference.

The IMU disposition units 200UA with the multi-IMU 200 in Fig. 15 as a unit may be disposed adjacent to each other in the horizontal and vertical directions to constitute the multi-IMU 200 including two or more island-like structure portions 221.

### <Part 2>

The example of the configuration in which the configuration is made of the two island-like structure portions 221 as a unit, the two island portions 221a are adjacent to each other in a horizontal direction, and the two connection portions 221b are provided in a part on a short side serving as an opposite side of the opening 211 with the two island portions 221a interposed therebetween has been described above.

However, the two connection portions 221b may be provided in a point symmetry with the center position as a reference on the long side opposite to the opening 211.

Fig. 16 illustrates an example of a configuration of the multi-IMU 200 configured with two island-like structure portions 221 as a unit, and is an example of a configuration in which the two connection portions 221b are provided in a positional relationship in which the connection portions 221b are provided in a point symmetry with the center position as a reference on the long side opposite to the opening 211.

That is, the multi-IMU 200 in Fig. 16 is configured of the island-like structure portions 221-21 and 221-22, the island portion 221a-21 and the island portion 221a-22 are adjacent to each other, and the connection portions 221b-21 and 221b-22 are provided on the long side facing the opening 211 at point symmetric positions with a center position as a reference.

Thus, in the multi-IMU 200 in Fig. 16, both connection portions 221b-21 and 221b-22 are disposed on opposite long sides of the opening 211 at point symmetric positions with a center position as a reference, and are disposed on the printed circuit board 210 propagating the vibration at separate positions.

Therefore, a structure in which the vibration is difficult to propagate between the island-like structure portions 221-21 and 221-22 is adopted, so that it is possible to curb interference due to vibration between the IMUs 201-21 and 201-22, and to curb generation of the beat noise caused by the interference.

Further, the IMU disposition units 200UB with the multi-IMU 200 in Fig. 16 as a unit may be disposed adjacent to each other in the horizontal and vertical directions to constitute the multi-IMU 200 including two or more island-like structure portions 221.

### <Part 3>

The example in which the multi-IMU 200 is configured with the two island-like structure portions 221 as a unit, and the two connection portions 221b are provided on a long side opposite the rectangular opening 211 and in a positional relationship of point symmetry with the center position as a reference has been described above.

However, the two connection portions 221b may be provided to have a positional relationship in which the connection portions 221b are disposed on adjacent sides (edges) of the rectangular opening 211.

Fig. 17 illustrates an example of a configuration of the multi-IMU 200 configured with two island-like structure portions 221 as a unit, and is an example of a configuration in which the two connection portions 221b are provided to have a positional relationship in which the connection portions 221b are disposed on adjacent sides (edges) of the rectangular opening 211.

That is, the multi-IMU 200 in Fig. 17 includes the island-like structure portions 221-31 and 221-32, the island portion 221a-31 and the island portion 221a-32 are adjacent to each other, the connection portion 221b-31 is provided on a side in a horizontal direction of the opening 211, and the connection portion 221b-32 is provided on a side in a vertical direction of the opening 211.

Thus, in the multi-IMU 200 in Fig. 17, both the connection portions 221b-31 and 221b-32 are disposed on a horizontal side and a vertical side of the opening 211 respectively, and are disposed at separate positions on the printed circuit board 210 propagating vibrations.

Therefore, the vibration is difficult to propagate between the island-like structure portions 221-31 and 221-32, thereby curbing interference of the vibration between the IMUs 201-31 and 201-32 and curbing generation of the beat noise caused by the vibration.

Although an example in which the connection portion 221b-31 is connected to a part of a left portion of the opening 211 from a center position on an upper horizontal side in Fig. 17, and the connection portion 221b-32 is connected to a part of the right side of the opening 211 in a vertical direction in Fig. 17 is shown in Fig. 17, the connection portion 221b-32 may be connected to a part of the right portion from the center position of the upper horizontal side of the opening 211 in Fig. 17, and the connection portion 221b-31 may be connected to a part of the left side of the opening 211 in the vertical direction in Fig. 17.

Further, the IMU disposition units 200UC with the multi-IMU 200 in Fig. 17 as a unit may be disposed adjacent to each other in the horizontal and vertical directions to constitute the multi-IMU 200 including two or more island-like structure portions 221.

### <Part 4>

An example in which the two connection portions 221b are in a positional relationship in which the two connection portions 221b are disposed on adjacent sides of the rectangular opening 211 with two island-like structure portions 221 as a unit has been described above.

However, the two connection portions 221b may be disposed at the corner portions, not at the side of the rectangular opening 211.

Fig. 18 illustrates an example of a configuration of the multi-IMU 200 configured with two island-like structure portions 221 as a unit, and is an example of a configuration in which two connection portions 221b are disposed in corner portions on the diagonal line of the rectangular opening 211.

That is, the multi-IMU 200 in Fig. 18 is configured of island-like structure portions 221-41 and 221-42, the island portion 221a-41 and the island portion 221a-42 are adjacent to each other, and connection portions 221'b-41 and 221'b-42 are provided in the corner portions on the diagonal line of the opening 211.

Thus, in the multi-IMU 200 of Fig. 18, both the connection portions 221'b-41 and 221'b-42 are disposed in corner portions on a diagonal line including an upper left corner portion and a lower right corner portion of the rectangular opening 211 in Fig. 18 and are disposed in the furthest positions on the opening 211 in the printed circuit board 210 propagating vibrations.

Therefore, the structure is such that vibrations are difficult to propagate between the island-like structure portions 221-41 and 221-42, and accordingly, interference due to the vibration between the IMUs 201-41 and 201-42 is curbed, so that the generation of beat noise caused by the interference can be curbed.

Although an example in which both the connection portions 221'b-41 and 221'b-42 are disposed in corner portions on a diagonal line including an upper left corner portion and a lower right corner portion of the rectangular opening 211 is illustrated in Fig. 18, the connection portions 221b-41 and 221b-42 may be disposed in corner portions on a diagonal line including an upper right corner portion and a lower left corner portion of the rectangular opening 211.

Further, the IMU disposition units 200UD with the multi-IMU 200 in Fig. 18 as a unit may be disposed adjacent to each other in the horizontal and vertical directions to constitute the multi-IMU 200 including two or more island-like structure portions 221.

### <<4. Third Embodiment>>

### <Part 1>

An example in which the island-like structure portion 221 is formed in the opening 211 provided on the printed circuit board 210 and the connection portions 221b are disposed to be spaced apart from each other, thereby curbing the propagation of the drive vibration of each island portion 221a, reducing the interference due to vibration, and curbing the generation of the beat noise caused by the vibration has been described.

However, in addition to such a configuration, a heavy object having a sufficiently large weight (for example, about 10 g or more) relative to the IMU 201 may be disposed on the back side of the island portion 221a so that the rigidity of the island portion 221a can be increased and vibrations are difficult to propagate, thereby reducing the interference due to the vibrations and curbing generation of beat noise due to the interference.

Fig. 19 illustrates an example of a configuration of a rear surface of the multi-IMU 200 which increases rigidity of the island portion 221a by disposing heater resistors as heavy objects on the rear sides of the island portions 221a-51 to 221a-54.

Since a structure of a front surface in Fig. 19 is the same as in the multi-IMU 200 in Fig. 10, description thereof will be omitted.

That is, the multi-IMU 200 in Fig. 19 includes island-like structure portions 221-51 to 221-54, and heater resistors 251-1 and 251-2 are disposed as heavy objects in the respective island portions 221a.

More specifically, heater resistors 251-51-1 and 251-51-2 are disposed in the island portion 221a-51, heater resistors 251-52-1 and 251-52-2 are disposed in the island portion 221a-52, heater resistors 251-53-1 and 251-53-2 are disposed in the island portion 221a-53, and heater resistors 251-54-1 and 251-54-2 are disposed in the island portion 221a-54.

With such a configuration, since the rigidity of the island-like structure portions 221-51 to 221-54 is improved, propagation of operation vibrations from other IMUs 201 via the connection portions 221b-51 to 221b-54 and the printed circuit board 210 is curbed and the interference related to the vibration is reduced so that the generation of the beat noise caused by the interference can be curbed.

The heater resistor 251 may be provided on the back surface side of the island portion 221a in the multi-IMU 200 including the two island-like structure portions 221 described with reference to Figs. 15 to 18, and the same effects can be achieved by such a configuration.

### <Part 2>

An example in which the heavy object is disposed on the back side of the island portion 221a to increase the rigidity of the island portion 221a, thereby making it difficult for vibrations to propagate and curbing the generation of the beat has been described above, other heavy objects may be used as long as the heavy objects are sufficiently heavy relative to the IMU 201 and therefore, a metal plate may be attached, for example.

Fig. 20 illustrates an example of a configuration of the rear surface of the multi-IMU 200 which increases rigidity of the island portion 221a by sticking a metal plate as a heavy object to the rear side of the island portion 221a.

Since a structure of a front surface in Fig. 20 is the same as in the multi-IMU 200 in Fig. 10, description thereof will be omitted.

That is, the multi-IMU 200 in Fig. 20 includes island-like structure portions 221-61 to 221-64, and metal plates 261-61 to 261-64 are stuck as heavy objects to respective island portions 221a-61 to 221a-64.

With such a configuration, since the rigidity of the island-like structure portions 221-61 to 221-56 is improved, the propagation of the operation vibration from the other IMU 201 via the connection portions 221b-61 to 221b-64 and the printed circuit board 210 is curbed, and the interference related to the vibration is reduced so that the generation of the beat noise caused by the interference is curbed.

A metal plate 261 may be disposed on the back surface side of the island portion 221a in the multi-IMU 200 including the two island-like structure portions 221 described by reference to Figs. 15 to 18, and the same effects can be achieved by such a configuration.

### <<5. Fourth Embodiment>>

The example in which a heavy object is disposed on the back side of the island portion 221a of the island-like structure portion 221 to improve rigidity so that the propagation of operation vibration is curbed and the interference related to the vibration is reduced so that the generation of the beat noise caused by the interference is curbed has been described above.

However, the vibration generated in the island portion 221a may be reduced by applying a substance having a viscosity higher than a predetermined viscosity such as grease on the island portion 221a so that the IMU 201 is surrounded and buried in the individual island portion 221a.

Fig. 21 is a side view of the island portion 221a applied with a substance having high viscosity such as grease so that the IMU 201 is surrounded.

In the island portion 221a of Fig. 21, grease 271 is applied on the island portion 221a as the substance having high viscosity so that the IMU 201-71 is surrounded.

That is, since the operational vibration of the IMU 201-71 propagates through the island portion 221a, the grease 271 having a higher viscosity than a predetermined viscosity is applied so that the IMU 201-71 in the island portion 221a is surrounded and buried so that the vibration of the island portion 221a is attenuated, and thus, it is possible to suppress the propagation of the operational vibration of the IMU 201. The viscosity of the grease 271 is preferably at least a degree to which the viscosity continues to be maintained in an application portion within a normal temperature range and impact/acceleration, for example.

Further, for example, when an interval between the two adjacent IMUs is small as shown by the IMU 201-81 and 201-82 in Fig. 22, grease 271' is applied across the two IMUs to attenuate the vibration of the island portion 221a to which the operation vibration of the IMUs 201-81 and 201-82 propagate together with the grease 271 applied to surroundings, and therefore, the propagation of operation vibrations of the IMUs 201-81 and 201-82 is curbed.

As a result, since the propagation of the operation vibration of the IMU 201 is curbed in any case, the interference related to the vibration is curbed, and therefore, it is possible to curb the generation of the beat noise caused by the interference.

### <<6. Fifth Embodiment>>

The example in which the highly viscous grease 271 is applied to surround the IMU 201 in the island portion 221a, the vibration of the island portion 221a to which the operation vibration of the IMU 201 directly propagates is attenuated, and as a result, the operation vibration of the IMU 201 is curbed and the generation of the beat noise is reduced has been described above.

Incidentally, although the printed circuit board 210 is assumed to be a rigid circuit board, a flexible circuit board made of a flexible material such as polyimide is used instead of the printed circuit board 210 so that propagation of drive vibration between the plurality of IMUs 201 is curbed.

Fig. 23 shows an example of a configuration of the multi-IMU 200 in which a flexible printed circuit board 291 is used instead of the printed circuit board 210 and IMUs 201-91 to 201-94 are provided on the flexible printed circuit board 291.

A left portion of Fig. 23 is an example of a configuration of a front surface of the multi-IMU 200, and a right portion of Fig. 23 is an example of a configuration of a back surface of the multi-IMU 200.

That is, the IMUs 201-91 to 201-94 are formed on the front surface of the multi-IMU 200 and are provided on the flexible printed circuit board 291, and a control IC 202 is provided. The flexible board 291 is soft, and when the IMUs 201-91 to 201-94 are normally mounted as they are, a mounting process is hindered. Therefore, reinforcing plates 201P-91 to 201P-94 configured of, for example, a glass epoxy plate or a stainless steel plate are stuck to back sides of mounting surfaces of the IMUs 201-91 to 201-94. The occurrence of a hindrance in the mounting process of the IMUs 201-91 to 201-94 on the flexible board 291 is curbed by the reinforcing plates 201P-91 to 201P-94.

The IMUs 201-91 to 201-94 in Fig. 23 have a configuration in which configurations corresponding to the vibrator 11 and the readout circuit 13 in the IMU 1 of Fig. 1 are arranged in parallel with the configuration corresponding to the base 12.

Therefore, only the configuration corresponding to the base 12 in the IMUs 201-91 to 201-94 can be seen on the rear surface of the multi-IMU 200. Further, a connector 203 is formed at the end of the flexible printed circuit board 291 on the rear surface of the multi-IMU 200.

With this configuration, the IMUs 201-91 to 201-94 are connected by a flexible printed circuit board made of a flexible material so that propagation of mutual operation vibrations of the IMUs 201-91 to 201-94 is curbed and interference related to the vibration is reduced, and this makes it possible to curb generation of the beat noise caused by the interference.

### <<7. Sixth Embodiment>>

A configuration in which a flexible printed circuit board configured of a flexible material such as polyimide is used instead of the printed circuit board 210 configured of a rigid circuit board to curb the propagation of drive vibration between the plurality of IMUs 201 has been described.

However, one IMU is mounted on one board, the connector that can electrically connect the front and back surfaces of each board is provided, the boards are electrically connected through insertion of the connector, and the boards are physically connected to be stacked, so that propagation of operation vibrations between the IMUs of each board can be curbed due to friction between the connectors.

Fig. 24 shows an example of a configuration of the multi-IMU 200 in which a single IMU is mounted on a single board, connector brackets that can be electrically connected on the front and back sides of each board are provided, and a connection is made through insertion of the connector so that the boards are electrically connected and physically connected to be stacked.

A left portion of Fig. 24 is an exploded perspective view of the multi-IMU 200, and a right portion of Fig. 24 is a perspective view in a state in which only a board 311-5 at a bottom stage is separated.

A multi-IMU 201 in Fig. 24 includes boards 311-1 to 311-5, and support pillars 321-1 to 321-4.

The IMUs 201-101 to 201-104 are provided on the boards 311-1 to 311-4, respectively, and the control IC 202 is provided on the board 311-5.

The boards 311-2 to 311-5 are provided with concave connectors 313-1 to 313-4 on the front surface side that is an upper surface in the figure, and the boards 311-1 to 311-4 are provided with convex connectors 312-1 to 312-4 on the back surface side in the figure.

The concave connectors 313-1 to 313-4 are fitted in a state where the concave connectors 313-1 to 313-4 face the convex connectors 312-1 to 312-4 to be electrically and physically connected, and as a result, the board 311-1 to 311-5 are electrically and physically connected in a stacked state.

Among the stacked boards 311-1 to 311-5, the boards 311-1 and 311-5 are larger in size than the boards 311-2 to 311-4. Further, the board 311-5 stacked on the upper end portion is provided with hole portions 311a-1 to 311a-4 at four corner portions.

Respective screws 322-1 to 322-4 are inserted into the holes 311a-1 to 311a-4 and fitted into the support pillars 321-1 to 321-4, so that the boards 311-1 and 311-5 in the upper and lower end portions among the stacked boards 311-1 to 311-5 are joined and the boards 311-2 to 311-4 are sandwiched between these, and therefore, the multi-IMU 200 of Fig. 24 comes to a fixed state as a whole.

With this configuration, since the concave connectors 313-1 to 313-4 and the convex connectors 312-1 to 312-4 provided in facing positions are fitted and connected between the respective boards 311-1 to 311-5, the propagation of vibrations are attenuated by the friction associated with the fitting, resulting in a structure in which vibrations are difficult to propagate between the boards 311-1 to 311-5.

Therefore, mutual operation vibrations between the IMUs 201-101 to 201-104 provided on respective boards 311-1 to 311-4 are difficult to propagate and interference related to the vibrations is reduced, thereby curbing generation of the beat noise caused by the interference.

### <<8. Seventh Embodiment>>

The configuration in which the plurality of boards each having one IMU mounted thereon are provided, and connectors that can be electrically connected to the front and back surfaces of the respective boards are provided, the boards are electrically connected through insertion of the connector, and the boards are physically connected to be stacked has been described above.

However, a plurality of connectors are provided on one board and the IMUs 201 are connected via the respective connectors so that propagation of vibration can be attenuated due to the friction related to fitting between the connectors, and nevertheless, when the operation vibrations are still incompatible and beat noise easily occur, replacement with a different IMU 201 that generates operation vibrations at a different frequency and a connection via a connector can be made so that generation of beat noise can be curbed as a whole.

Fig. 25 shows an example of a configuration of the multi-IMU 200 in which a plurality of connectors are provided on one board and the IMU 201 is connected through each connector.

A left figure of Fig. 25 is a top view of the multi-IMU 200, and a right figure of Fig. 25 is an exploded perspective view of the multi-IMU 200.

That is, the multi-IMU 200 in Fig. 25 includes the connectors 351-101 to 351-104, the control IC 202 that controls an entire operation of the multi-IMU 200, and the connector 203 used for connection with an external device on the printed circuit board 210.

Further, the IMU 201-111 to IMU 201-114 are electrically and physically connected via the respective the connectors 351-101 to 351-104. The IMU 201-111 to IMU 201-114 are provided with connectors corresponding to the connectors 351-101 to 351-104, although not shown in the figure.

With this configuration, each of the connectors (not illustrated) of the IMU 201-111 to the IMU 201-114 and the corresponding connectors 351-101 to 351-104 are fitted and connected, and the operation vibrations of the IMUs 201-111 to 201-114 are attenuated and propagated to the printed circuit board 210 due to the friction related to the fitting.

Therefore, the respective operation vibrations of the IMU 201-111 to the IMU 201-114 are difficult to propagate to the printed circuit board 210 through the respective connectors 351-101 to 351-104.

Therefore, since mutual operation vibration between the IMUs 201-111 to 201-114 is difficult to propagate, the interference related to the vibration can be reduced and generation of the beat noise caused by the interference can be curbed.

Further, in such a configuration, when a beat occurs, the generation of beat noise may be curbed through replacement of the IMU 201 with another IMU 201 with a different operation vibration to create a combination that does not interfere with the operation vibration as a whole.

### <<9. Eighth Embodiment>>

The configuration in which the plurality of connectors are provided on the printed circuit board and the IMUs 201 are connected through the respective connectors, the propagation of operation vibration from the IMU 201 to the printed circuit board is attenuated by friction related to fitting between the connectors and the beat noise is curbed has been described above.

However, the plurality of IMUs 201 are stuck on a base having a relatively large weight so that an operation vibration between the IMUs 201 is difficult to propagate.

Fig. 26 is a side view of the multi-IMU 200 in which the plurality of IMUs 201 are stuck on the base having a relatively large weight.

In the multi-IMU 200 in Fig. 26, the IMUs 201-121 and 201-122 are connected via double-sided tapes 361-111 and 361-112 on the base 362 having a weight sufficiently larger than a weight of the IMU 201, for example, a relatively large weight of about 10 g or more.

With such a configuration, the IMUs 201-121 and 201-122 are fixed on the base 362 having a large weight by the double-sided tapes 361-111 and 361-112 respectively, thereby curbing propagation of operation vibration.

As a result, since the propagation of the operation vibration is curbed between the IMUs 201-121 and 201-122, the interference related to the vibration can be curbed and the beat noise caused by the interference can be reduced.

In the present specification, the system means a set of a plurality of components (for example, apparatuses, modules (components)), regardless of whether all the components are in the same case. Therefore, a plurality of apparatuses accommodated in separate cases and connected through a network and one apparatus in which a plurality of modules are accommodated in one case are all systems.

The embodiment of the present disclosure is not limited to the embodiments described above, and various changes can be made without departing from the gist of the present disclosure.

The present disclosure may take the following configuration.
<1> An inertial measurement apparatus including:
   a predetermined number of mounting portions configured to have a single inertial measurement unit (IMU) mounted thereon; and
   the predetermined number of connection portions configured to connect one of the mounting portions to an edge of an opening provided on a board, wherein
   the connection portion is less rigid than the board.
<2> The inertial measurement apparatus according to <1>, wherein the connection portion is less rigid than the mounting portion.
<3> The inertial measurement apparatus according to <1> or <2>, wherein the opening is a square, and
   each of the connection portions connects each side of the square to the mounting portion.
<4> The inertial measurement apparatus according to <3>, wherein the mounting portion has a shape in which a range serving as the opening is substantially equally divided by the predetermined number, and
   each of the connection portions connects a part of each side of the square to the mounting portion.
<5> The inertial measurement apparatus according to <4>, wherein the predetermined number is 4,
   the mounting portion has a shape in which the range serving as the opening is substantially equally divided in 4, and
   each of the connection portions connects a part on the right or left side from a center position of each side of the square to the mounting portion.
<6> The inertial measurement apparatus according to <4>, wherein the predetermined number is 4,
   the mounting portion has a shape in which the range serving as the opening is substantially equally divided in 4, and
   each of the connection portions connects each corner portion of the square to the mounting portion.
<7> The inertial measurement apparatus according to <4>, wherein the predetermined number is 2,
   the mounting portion has a shape in which the range serving as the opening is substantially equally divided in 2, and
   each of the connection portions connects a part of a short side serving as an opposite side of the square to the mounting portion.
<8> The inertial measurement apparatus according to <4>, wherein the predetermined number is 2,
   the mounting portion has a shape in which the range serving as the opening is substantially equally divided in 2, and
   each of the connection portions connects a part of the right or left portion from a center of a long side serving as an opposite side of the square to the mounting portion.
<9> The inertial measurement apparatus according to <4>, wherein the predetermined number is 2,
   the mounting portion has a shape in which the range serving as the opening is substantially equally divided in 2,
   the first connection portion connects a part of a right or left portion from a center of a long side of the square to the mounting portion, and
   the second connection portion connects a part of a short side of the square to the mounting portion.
<10> The inertial measurement apparatus according to <4>, wherein the predetermined number is 2,
   the mounting portion has a shape in which the range serving as the opening is substantially equally divided in 2, and
   each of the connection portions connects a corner portion on a diagonal line of the square to the mounting portion.
<11> The inertial measurement apparatus according to any one of <1> to <10>, wherein the plurality of units with the predetermined number of mounting portion accommodated in the opening and the predetermined number of connection portions as a unit are disposed side by side in at least one of a horizontal direction and a vertical direction.
<12> The inertial measurement apparatus according to any one of <1> to <11>, wherein the mounting portion includes a heavy object having a weight sufficiently larger than the IMU on a back surface of a surface on which the IMU is mounted.
<13> The inertial measurement apparatus according to <12>, wherein the heavy object includes a heater resistor and a metal plate.
<14> The inertial measurement apparatus according to any one of <1> to <13>, wherein, in the mounting portion, a substance with a viscosity higher than a predetermined viscosity is applied to surround and bury the IMU.
<15> The inertial measurement apparatus according to <14>, wherein the substance with the viscosity higher than the predetermined viscosity is grease.
<16> The inertial measurement apparatus according to any one of <1> to <15>, wherein an interval between the adjacent mounting portions is such an interval that physical contact is not made even at the time of thermal expansion of a main body.
<17> The inertial measurement apparatus according to any one of <1> to <16>, wherein an interval between the mounting portion and the edge of the opening is such an interval that physical contact is not made even at the time of thermal expansion of a main body.
<18> The inertial measurement apparatus according to any one of <1> to <17>, including: a combination unit configured to combine and output detection results of the plurality of IMUs.

### [Reference Signs List]

200 Multi-IMU (Inertial Measurement Unit)
201, 201-1 to 201-4, 201-11, 201-12, 201-21, 201-22, 201-31, 201-32, 201-41, 201-42, 201-81,
201-82, 201-91 to 201-94, 201-101 to 201-104, 201-111 to 201-114, 201-121, 201-122 IMU
210 Printed circuit board
211 Opening
221-1 to 221-4, 221-11, 221-12, 221-21, 221-22, 221-31, 221-32, 221-41, 221-42, 221-51 to 221-54, 221-61 to 221-64, 221'-1 to 221'-4 Island-like structure portion
221a, 221a-1 to 221a-4, 221a-11, 221a-12, 221a-21, 221a-22, 221a-31, 221a-32, 221a-41, 221a-42, 221a-51 to 221a-54, 221a-61 to 221a-64, 221'a, 221'a-1 to 221'a-4 Island portion
221b, 221b-1 to 221b-4, 221b-11, 221b-12, 221b-11, 221b-12, 221b-21, 221b-22, 221b-31, 221b-32, 221b-41, 221b-42, 221b-51 to 221b-54, 221b-61 to 221b-64, 221'b, 221'b-1 to 221'b-4 Connection portion
251, 251-51-1, 251-51-2, 251-52-1, 251-52-2, 251-53-1, 251-53-2, 251-54-1, 251-54-2 Heater resistor
261-61 to 261-64 Metal plate
271, 271' Grease
291 Flexible board
311-1 to 311-5 Printed circuit board
312-1 to 312-4 Convex connector
313, 313-1 to 313-4 Concave connector
351, 351-1 to 351-4 Connector
361-111, 361-112 Double-sided tape
362 Base

## Claims

1. An inertial measurement apparatus comprising:
a predetermined number of mounting portions configured to have a single inertial measurement unit (IMU) mounted thereon; and
the predetermined number of connection portions configured to connect one of the mounting portions to an edge of an opening provided on a board, wherein
the connection portion is less rigid than the board.

2. The inertial measurement apparatus according to claim 1, wherein the connection portion is less rigid than the mounting portion.

3. The inertial measurement apparatus according to claim 1, wherein
the opening is a square, and
each of the connection portions connects each side of the square to the mounting portion.

4. The inertial measurement apparatus according to claim 3, wherein
the mounting portion has a shape in which a range serving as the opening is substantially equally divided in the predetermined number, and
each of the connection portions connects a part of each side of the square to the mounting portion.

5. The inertial measurement apparatus according to claim 4, wherein
the predetermined number is 4,
the mounting portion has a shape in which the range serving as the opening is substantially equally divided in 4, and
each of the connection portions connects a part on the right or left side from a center position of each side of the square to the mounting portion.

6. The inertial measurement apparatus according to claim 4, wherein
the predetermined number is 4,
the mounting portion has a shape in which the range serving as the opening is substantially equally divided in 4, and
each of the connection portions connects each corner portion of the square to the mounting portion.

7. The inertial measurement apparatus according to claim 4, wherein
the predetermined number is 2,
the mounting portion has a shape in which the range serving as the opening is substantially equally divided in 2, and
each of the connection portions connects a part of a short side serving as an opposite side of the square to the mounting portion.

8. The inertial measurement apparatus according to claim 4, wherein
the predetermined number is 2,
the mounting portion has a shape in which the range serving as the opening is substantially equally divided in 2, and
each of the connection portions connects a part of the right or left portion from a center of a long side serving as an opposite side of the square to the mounting portion.

9. The inertial measurement apparatus according to claim 4, wherein
the predetermined number is 2,
the mounting portion has a shape in which the range serving as the opening is substantially equally divided in 2,
the first connection portion connects a part of a right or left portion from a center of a long side of the square to the mounting portion, and
the second connection portion connects a part of a short side of the square to the mounting portion.

10. The inertial measurement apparatus according to claim 4, wherein
the predetermined number is 2,
the mounting portion has a shape in which the range serving as the opening is substantially equally divided in 2, and
each of the connection portions connects a corner portion on a diagonal line of the square to the mounting portion.

11. The inertial measurement apparatus according to claim 1, wherein the plurality of units with the predetermined number of mounting portions accommodated in the opening and the predetermined number of connection portions as a unit are disposed side by side in at least one of a horizontal direction and a vertical direction.

12. The inertial measurement apparatus according to claim 1, wherein the mounting portion includes a heavy object having a weight sufficiently larger than the IMU on a back surface of a surface on which the IMU is mounted.

13. The inertial measurement apparatus according to claim 12, wherein the heavy object includes a heater resistor and a metal plate.

14. The inertial measurement apparatus according to claim 1, wherein, in the mounting portion, a substance with a viscosity higher than a predetermined viscosity is applied to surround and bury the IMU.

15. The inertial measurement apparatus according to claim 14, wherein the substance with the viscosity higher than the predetermined viscosity is grease.

16. The inertial measurement apparatus according to claim 1, wherein an interval between the adjacent mounting portions is such an interval that physical contact is not made even at the time of thermal expansion of a main body.

17. The inertial measurement apparatus according to claim 1, wherein an interval between the mounting portion and the edge of the opening is such an interval that physical contact is not made even at the time of thermal expansion of a main body.

18. The inertial measurement apparatus according to claim 1, comprising:
a combination unit configured to combine and output detection results of the plurality of IMUs.
